# EUROPÄISCHE PATENTSCHRIFT

(11) **EP 0 536 474 B1**
(45) Veröffentlichungstag und Bekanntmachung des Hinweises auf die Patenterteilung: **08.02.1995**
(21) Anmeldenummer: 92109606.1
(22) Anmeldetag: 06.06.1992
(51) Int. Cl.: C04B 16/06, C04B 28/02

(54) **Mehrkomponentensystem aus natürlichen Polymeren und PAN-Formkörpern mit asbestspezifischen Eigenschaften für den Einsatz in hydraulischen Bindern**
Multiple component system comprising natural polymers and PAN-fibers with asbestos-specific properties for use in hydraulic binders
Système de composants multiples à partir de polymères naturels et de corps formés de structure PAN présentant des propriétés spécifiques de l'amiante pour l'emploi dans des liants hydrauliques

(30) Priorität: 10.10.1991 DE 4133895
(43) Veröffentlichungstag der Anmeldung: 14.04.1993
(73) Patentinhaber: MÄRKISCHE FASER AG PREMNITZ, 14727 Premnitz (DE)
(72) Erfinder: Schmidt, Burkhard, Dr., O-1832 Premnitz (DE); Wolf, Klaus-Friedrich, Dr., O-1830 Rathenow (DE); Schöning, Klaus-Jürgen, Dipl.-Ing, O-1830 Rathenow (DE); Kühne, Ursula, O-1832 Premnitz (DE)

(56) Entgegenhaltungen:
- EP-A- 0 225 932
- DD-C- 255 957
- DE-A- 3 116 005
- GB-A- 2 000 509
- GB-A- 2 075 076

## Beschreibung

Die Erfindung betrifft ein Mehrkomponentensystem, bestehend aus natürlichen Polymeren und Polyacrylnitril(PAN)-Formkörpern mit asbestspezifischen Eigenschaften für den Einsatz in hydraulischen Bindern, das nach dem Hatschek- und anderen, in der Baustoffindustrie bekannten Verfahren, verarbeitet werden kann.

Weltweit entfallen ca 70 % das Verbrauchs an Asbest auf Asbestzementprodukte. Trotz des äußerst optimalen Zusammenwirkens dar Hauptbestandteile Zement als Matrix und Asbest als Makro- und Mikrobewehrung und der Möglichkeit der Verarbeitung auf hochproduktiven Herstellungstechnologien wird im Hinblick auf den Umweltschutz und damit auf die Gesundheit der Menschen, insbesondere durch die gesundheitsschädigende Wirkung von Asbeststäuben, international intensiv und mit hohem Aufwand an der vollständigen Asbestsubstitution gearbeitet. Bisher ist es jedoch noch nicht gelungen, den Rohstoff Asbest durch ein einziges Produkt so zu ersetzen, daß die vorhandene hochproduktive Technik ohne wesentliche Veränderungen weiter genutzt werden kann. Die Eigenschaftskombination aus mechanischer Festigkeit, chemischer Beständigkeit, Dimensionsstabilität und Morphologie ist für Asbest einmalig. Deshalb muß gegenwärtig beim Faserzementhersteller ein sogenannter "Rezepturcocktail" zusammengestellt werden, um diesen Anforderungen gerecht zu werden.
Aus der Literatur sind eine Reihe asbestfreie, faserverstärkte, hydraulisch abbindende Zusammensetzungen bekannt.

In DE-OS 3 105 519 werden solche Zusammensetzungen beschrieben, die zu faserverstärkten Formteilen verarbeitet werden können. Sie werden durch Mischen von Fasern, hydraulischen Bindemitteln und wasserlöslichen Polymeren sowie Zugaben von Metallverbindungen erhalten. In DE-PS 3 002 484 wird ebenfalls ein Verfahren zur Herstellung eines asbestfreien, faserverstärkten, hydraulisch abbindenden Materials beansprucht. Dazu wird ein hydraulisches Bindemittel mit Faser und Wasser in größerer als zum Abbinden des Bindemittels benötigter Menge und gegebenenfalls weitere Zusätze zu einer Aufschlämmung vermischt, die nach dem Entwässerungsverfahren weiterverarbeitet wird.
Auch aus DE-OS 3 115 571 geht hervor, daß man versucht hat, durch Mischen mehrerer synthetischer organischer, gegebenenfalls fibrillierter Fasern und/oder Fibride asbestanaloge Eigenschaften zu erreichen.
Gemäß EP 68 741 werden asbestfreie Produkte geschützt, die neben 40 bis 60 % Zement und 30 bis 40 % Silikat 5 bis 15 % Zellulosefasern enthalten.
Auch nach DE-OS 3 938 075 wird eine Mischung aus Zellulosefasern, einem Anteil eines hydrophobierenden Mittels und einem hitzebeständigen Latex hergestellt.
Es ist auch bekannt, PAN-Fasern als Zusatzstoffe für die Herstellung von Faserzementprodukten einzusetzen. Nach DE-OS 3 027 844 werden besonders hochfeste PAN-Fasern verwendet.
In DD-PS 255 957 werden ebenfalls PAN-Fasern mit spezifischen Eigenschaften, die nach einem modifizierten Spinn- und Nachbehandlungsverfahren hergestellt werden, beschrieben.
Alle diese bekannten Verfahren haben den Nachteil, daß sie kein Asbestsubstitut als einheitliches Produkt aus einer Hand mit allen notwendigen Bestandteilen liefern.
Die vorwiegend als Bewehrung fungierenden Armierungsfasern, die speziellen Prozeßfasern und die spezifischan Zuschläge müssen von verschiedenen Herstellern bezogen, gelagert, dosiert und gemischt werden, was mit erheblichen Zusatzinvestitionen und Bedienungsaufwand verbunden ist. Hinzu kommt, daß ein spezielles know-how bei der Verarbeitung zu den entsprechenden Finalprodukten notwendig ist.

Aufgabe der Erfindung ist es deshalb, ein Asbestsubstitut als einheitliches Produkt zu finden, das in der Baustoffindustrie nach dem Hatschek- und anderen bekannten Verfahren verarbeitet werden kann.
Die Aufgabe wird durch das in den Patentansprüchen beschriebene Mehrkomponentensystem gelöst. Das erfindungsgemäße Mehrkomponentensystem besteht aus natürlichen Polymeren und PAN-Formkörpern, die such aus PAN-Strukturformkörpern und Formkörpern zusammensetzen.
Dabei liegen die inhärenten Eigenschaften der PAN-Strukturformkörperkomponente 10 bis 40 % unter denen der Formkörperkomponente.
Im Gegensatz zu der bisher praktizierten Verfahrensweise der Rezeptierung der Einzelkomponenten beim Faserzementerzeugnis-Hersteller handelt es sich bei dem erfindungsgemäßen Asbestsubstitut um ein Komplexprodukt, das in Abhängigkeit von der Verarbeitungstechnologie und den herzustellenden Faserzementerzeugnissen als einfaches komplexes System ohne weitere Zumischung von Makro- und Mikrobewehrungs- und Prozeßkomponenten die Baustoffindustrie in die Lage versetzt, nach den für die Produktion mit Asbest bekannten Verfahren Faserzementprodukte mit einer wesentlich geringeren Wasser- und damit Umweltbelastung als mit derzeitig üblichen Verfahren für die Aufbereitung der Einzelkomponenten und deren aufwendige Dosierung zu produzieren.

### Beispiel

Unter Verwendung einer speziellen PAN-Armierungsfaser (hergestellt nach DD-PS 255 957), eines vorgeschlagenen speziellen PAN-Strukturformkörpers mit spezifischen Eigenschaften für die Verarbeitung in hydraulischen Bindern und einer Kiefernsulfatzellulose, die mit einem handelsüblichen Doppelscheibenrefiner bis zu einem Mahlgrad von 63 °SR aufgemahlen wurde, werden in einer 12 m³ fassenden Bütte, die ein Rührwerk mit 3 Rührblättern besitzt, das mit 31 U/min arbeitet, 69 kg Formkörper (Armierungsfaser) mit einem Feuchtegehalt von 35 %, einer spezifischen Oberfläche von 0,5 m²/g, einer Reißfestigkeit von 69 cN/tex, 84 kg atro PAN-Strukturformkörper (PAN-Pulp) mit einem Wassergehalt von 4,78 x 10³ %, einem Wasserrückhaltevermögen von 61 %, einer spezifischen Oberfläche von 17 m²/g, einer Reißfestigkeit von 64 cN/tex, und einem häufigsten Porenradienbereich von 3 500 nm bis 6 000 nm und 147 kg atro einer Kiefernsulfatzellulose, die mit 2,57 x 10³ % Wasser, bezogen auf den Feststoff, einem Wasserrückhaltevermögen von 246 %, einer spezifischen Oberfläche von 12 m²/g und einem häufigsten Porenradienbereich von 9000 nm bis 12000 nm langsam und kontinuierlich während einer Zeit von 15 Minuten zugemischt und 60 Minuten gerührt.
Anschließend wird über eine handelsübliche Siebbandpresse entwässert, wobei ein Vlies von 75 cm Breite und 1,5 cm Stärke gebildet wird. Die Entwässerung wird so gesteuert, daß ein atro-Gehalt von 30 % erreicht wird. Das 233 % feuchte Vlies weist 128 % Wasserrückhaltevermögen auf und wird zu je 50 kg Feststoff in Kartons abgelegt und versandfertig auf Paletten gelagert. Die Mahlgradbestimmung nach Schopper-Riegler ergibt 31 °SR. Bei der Weiterverarbeitung wird eine einwandfreie Verteilung erreicht, wenn das Masse-Verhältnis des Systems zu Wasser 1:4 beträgt.

## Patentansprüche

1. Mehrkomponentensystem aus natürlichen Polymeren und PAN-Formkörpern mit asbestspezifischen Eigenschaften für den Einsatz in hydraulischen Bindern, das nach dem Hatschek- und anderen, in dar Baustoffindustrie bekannten Verfahren verarbeitet wird, dadurch gekennzeichnet, daß das Verhältnis natürliches Polymeres zu PAN-Formkörper, bestehend aus PAN-Strukturformkörper und Formkörper zwischen 60:40 und 40:60, das Wasserrückhaltevermögen zwischen 120 bis 160 % liegt, der Feststoffgehalt mindestens 26 % beträgt und der Mahlgrad zwischen 25 und 35 °SR liegt.

2. Mehrkomponentensystem nach Anspruch 1, dadurch gekennzeichnet, daß sich die spezifischen Oberflächen der Einzelkomponenten Formkörper zu natürlichem Polymeren zu PAN-Strukturformkörper von 1:20:30 bis 1:30:40 verhalten.

3. Mehrkomponentensystem nach Anspruch 1 und 2, dadurch gekennzeichnet, daß das Auflösungsvermögen bei einem Verhältnis zu Wasser von mindestens 1:4 gegeben ist.

4. Mehrkomponentensystem nach Anspruch 1 bis 3, dadurch gekennzeichnet, daß der Quotient aus der Menge der PAN-Strukturformkörperkomponente und der Menge der Formkörperkomponente im Gemisch zwischen 1 und 1,5 liegt.

5. Mehrkomponentensystem nach Anspruch 1 bis 4, dadurch gekennzeichnet, daß sich der häufigste Porenradienbereich des natürlichen Polymeren zum häufigsten Porenradienbereich des PAN-Strukturformkörpers wie 1,5 bis 3,5:1 verhält.

6. Mehrkomponentensystem nach Anspruch 1 bis 5, dadurch gekennzeichnet, daß sich die inhärenten Eigenschaften der PAN-Strukturformkörperkomponente zu der Formkörperkomponente wie 0,6 bis 0,9:1,0 verhalten.

## Claims

1. Multi-component system of natural polymers and PAN moulded bodies having asbestos-specific properties for use in hydraulic binders, which is processed by the Hatschek process and other processes known in the building materials industry, characterised in that the ratio natural polymer to PAN moulded body comprising PAN structural moulded body and moulded body is between 60 : 40 and 40 : 60, the water retention value is between 120 and 160 %, the solids content is at least 26 %, and the degree of grinding is between 25 and 35° SR.

2. Multi-component system according to Claim 1, characterised in that the specific surface areas of the individual components moulded body to natural polymer to PAN structural moulded body are in a ratio of from 1 : 20 : 30 to 1 : 30 : 40.

3. Multi-component system according to Claims 1 and 2, characterised in that dissolving power obtains at a ratio to water of at least 1 : 4.

4. Multi-component system according to Claims 1 to 3, characterised in that the quotient of the quantity of PAN structural moulded body component and the quantity of moulded body component in the mixture is between 1 and 1,5.

5. Multi-component system according to Claims 1 to 4, characterised in that the most frequent pore radius range of the natural polymer and the most frequent pore radius range of the PAN structural moulded body are in the ratio of from 1,5 to 3,5 : 1.

6. Multi-component system according to Claims 1 to 5, characterised in that the inherent properties of the PAN structural moulded body component and the moulded body component are in the ratio of from 0,6 to 0,9 : 1,0.

## Revendications

1. Système de composants multiples à partir de polymères naturels et de corps formés de structure PAN présentant des propriétés spécifiques de l'amiante pour l'emploi dans des liants hydrauliques, système qui est traité selon le procédé Hatschek ou autres procédés connus dans l'industrie des matériaux de construction, caractérisé en ce que la proportion des polymères naturels par rapport aux corps formés PAN, se composant de corps formés de structure PAN et de corps formés, se situe entre 60 : 40 et 40 : 60, le pouvoir de retenue de l'eau est de 120 à 160 %, la teneur en matière solide s'élève au moins à 26 % et le degré de moulure se situe entre 25 et 35° SR.

2. Système de composants multiples selon la revendication 1, caractérisé en ce que les surfaces spécifiques de chaque composant de corps formés sont par rapport au polymère naturel et aux corps formés de structure PAN de 1:20:30 à 1:30:40.

3. Système de composants multiples selon la revendication 1 et 2, caractérisé en ce que le pouvoir de dissolution est donné pour un rapport par rapport à l'eau d'au moins 1:4.

4. Système de composants multiples selon la revendication 1 à 3, caractérisé en ce que le quotient à partir de la quantité des composants de corps formés de structure PAN et de la quantité des composants de corps formés se situe dans le mélange entre 1 et 1,5.

5. Système de composants multiples selon la revendication 1 à 4, caractérisé en ce que le rapport de la zone la plus fréquente de rayons pores la plus fréquente du polymère naturel par rapport à la zone des rayons pores la plus fréquente du corps formé de structure PAN est de 1,5 à 3,5:1.

6. Système de composants multiples selon la revendication 1 à 5, caractérisé en ce que les propriétés inhérentes des composants de corps formés de structure PAN par rapport aux composants de corps formés sont de 0,6 à 0,9:1,0.
